# EUROPÄISCHE PATENTSCHRIFT

(11) **EP 0 939 004 B1**
(45) Veröffentlichungstag und Bekanntmachung des Hinweises auf die Patenterteilung: **31.07.2002**
(21) Anmeldenummer: 99101708.8
(22) Anmeldetag: 09.02.1999
(51) Int. Cl.: B60R 1/12

(54) **Anzeigevorrichtung für ein Kraftfahrzeug**
Display device for a vehicle
Dispositif d'affichage pour un véhicule

(30) Priorität: 27.02.1998 DE 19808393
(43) Veröffentlichungstag der Anmeldung: 01.09.1999
(73) Patentinhaber: Volkswagen Aktiengesellschaft, 38436 Wolfsburg (DE)
(72) Erfinder: Anders, Peter, Dipl.-Ing., 38543 Hillerse (DE)

(56) Entgegenhaltungen:
- WO-A-96/14222
- DE-U- 29 702 746
- PATENT ABSTRACTS OF JAPAN vol. 1997, no. 02, 28. Februar 1997 (1997-02-28) & JP 08 268188 A (MITSUBISHI MOTORS CORP), 15. Oktober 1996 (1996-10-15)

## Beschreibung

Die Erfindung betrifft eine Anzeigevorrichtung in einem Kraftfahrzeug.

Im Bereich der Kraftfahrzeugtechnik stellt sich das Problem, daß einerseits dem Kraftfahrzeugführer immer mehr Informationen zur Entlastung im Straßenverkehr zur Verfügung gestellt werden und andererseits der vorhandene Bauraum begrenzt ist. Darüber hinaus führt eine Vielzahl unabhängiger Anzeigeeinrichtungen zu einer gewissen Unübersichtlichkeit für den Kraftfahrzeugführer, was die rechtzeitige Wahrnehmung der dargestellten Informationen erschwert.

Aus der DE 37 20 848 ist eine Anzeigevorrichtung in Kraftfahrzeugen zur Ausgabe von Informationen bekannt, die mit dem Rückspiegel des Kraftfahrzeuges eine Baueinheit bildet. Um eine möglichst geringe Beeinträchtigung für die Sicht des Kraftfahrzeugführers nach hinten durch den Rückspiegel zu erzielen, ist ein LCD hinter einem Flächenbereich der Spiegelfläche des Rückspiegels angeordnet, wobei dieser Bereich teilweise lichtdurchlässig ist. Die von der Rückseite her zu beleuchtende LCD ist zur Ausgabe von Informationen elektronisch so anzusteuem, daß das Licht an den angesteuerten bzw. nicht angesteuerten Bereichen durch die LCD und durch die teilweise lichtdurchlässige Spiegelfläche für den Fahrer sichtbar austritt. Um das Sichtfeld des Kraftfahrzeugführers nicht zu reduzieren, wird eine Vergrößerung der Spiegelfläche vorgeschlagen, was jedoch zu einer Vergrößerung der Gesamtabmessung führt. Ein weiterer Nachteil ist, daß die Abmessungen der LCD und der dazugehörigen Schaltungselektronik sehr voluminös sind, was die Gesamtabmessungen des Rückspiegels weiter vergrößert. Des Weiteren sind derartige LCD's sehr kostenintensiv.

Aus der DE 37 35 847 ist ein Rückspiegel mit einer Anzeigefläche bekannt, bei dem die als LCD ausgebildete Anzeigefläche im Spiegelgehäuse unmittelbar unterhalb der Spiegelfläche angeordnet ist. Nachteilig an dieser Anordnung ist jedoch, daß die Anzeigefläche nicht unmittelbar im üblichen Blickbereich des Kraftfahrzeugführers angeordnet ist.

Der Fahrer muß daher zum Ablesen der Informationen seinen Blick vom Rückspiegel nach unten richten.

Des weiteren sind Kraftfahrzeugrückspiegel mit einer Abblendeinrichtung für das Spiegelglas bekannt, wobei die lichttechnisch gesteuerte Abblendeinrichtung einen lichtelektrischen Wandler aufweist, der mit einer auf einer Platine angeordneten elektrischen Schaltung verbunden ist. Ein solcher Kraftfahrzeugrückspiegel ist beispielsweise aus der EP 0 785 103 bekannt, bei dem ein Lichtleiter vorgesehen ist, dessen freie Stimfläche neben dem Spiegelglas und im wesentlichen parallel zu der äußeren Spiegelglasfläche angeordnet ist und dessen andere Stimfläche vor dem auf der Platine befestigten Wandler gehalten ist.

Aus der DE 197 02 746 ist ein Außenrückblickspiegel bekannt, bei dem im Spiegelgehäuse eine Wiederholblinkleuchte vorgesehen ist. Als Ersatz für herkömmliche Glühleuchten, die einerseits große Wärme entwickeln und andererseits viel Platz benötigen, wird dort vorgeschlagen, innerhalb des Gehäuses eine LED als Lichtquelle anzuordnen, die mittels eines Lichtleiters mit einer Lichtaustrittsöffnung im Spiegelgehäuse verbunden ist.

Der Erfindung liegt daher das technische Problem zugrunde, eine Anzeigevorrichtung für ein Kraftfahrzeug zu schaffen, die im Sichtfeld des Kraftfahrzeugführers angeordnet ist, ohne zusätzlichen Bauraum zu benötigen.

Die Lösung des technischen Problems ergibt sich durch die Merkmale des Patentanspruchs 1. Durch das dem lichtemittierenden Element zugeordnete Lichtleiterkabel kann das lichtemittierende Element lokal unabhängig von der Lichtaustrittsöffnung angeordnet werden, so daß der vorhandene Bauraum optimal ausgenutzt wird. Das lichtemittierende Element kann dabei entweder irgendwo im Gehäuse oder außerhalb des Gehäuses im Kraftfahrzeug angeordnet werden. Dieser Freiheitsgrad ermöglicht darüber hinaus ein einfacheres Abführen der Verlustwärme des lichtemittierenden Elements. Weitere vorteilhafte Ausgestaltungen der Erfindung ergeben sich aus den Unteransprüchen.

In einer weiteren bevorzugten Ausführungsform sind die lichtemittierenden Elemente als LED's ausgebildet, die im Gegensatz zu LCD's sehr kostengünstig sind, über eine lange Lebensdauer verfügen und verhältnismäßig wenig Verlustwärme erzeugen.

Bevorzugt wird die Lichtaustrittsöffnung dadurch realisiert, daß das Spiegelglas im Bereich der Lichtleiterkabel semitransparent ausgebildet ist, wodurch bei nicht aktivierter Anzeigevorrichtung das optische Erscheinungsbild des Spiegelglases nicht verändert wird.

Weiter kann den Lichtleiterkabeln eweils eine Linse zugeordnet werden, so daß das Licht der Anzeigevorrichtung auf den Kraftfahrzeugführer gelenkt werden kann, was einerseits die Wahrnehmung erhöht und gleichzeitig einen höheren Freiheitsgrad hinsichtlich des Ortes der Lichtleiterkabel bewirkt. Vorzugsweise werden die Lichtleiterkabel in Bereichen des Spiegelglases angeordnet, in denen nicht mit relevanten Informationen bezüglich des Verkehrsraumes zu rechnen ist, so daß die Anzeigevorrichtung das Sichtfeld des Fahrers nicht beeinträchtigt.

Durch die Anordnung einer Vielzahl von Lichtleitern in der Lichtaustrittsöffnung, die wahlweise zusammen ansteuerbar sind, sind beliebige Darstellungsformen für die Informationen möglich, beispielsweise alphanumerisch oder piktogrammförmig. Durch Zuordnung eines Programmspeicherbausteines für die LED's kann sich der Nutzer beispielsweise eine gewünschte Darstellungsform auswählen.

Die Erfindung wird nachfolgend anhand eines bevorzugten Ausführungsbeispieles näher erläutert. Die Fig. zeigen:
- Fig. 1: eine Perspektivdarstellung eines Kraftfahrzeugrückspiegels mit einer Anzeigefläche auf der Spiegelfläche und

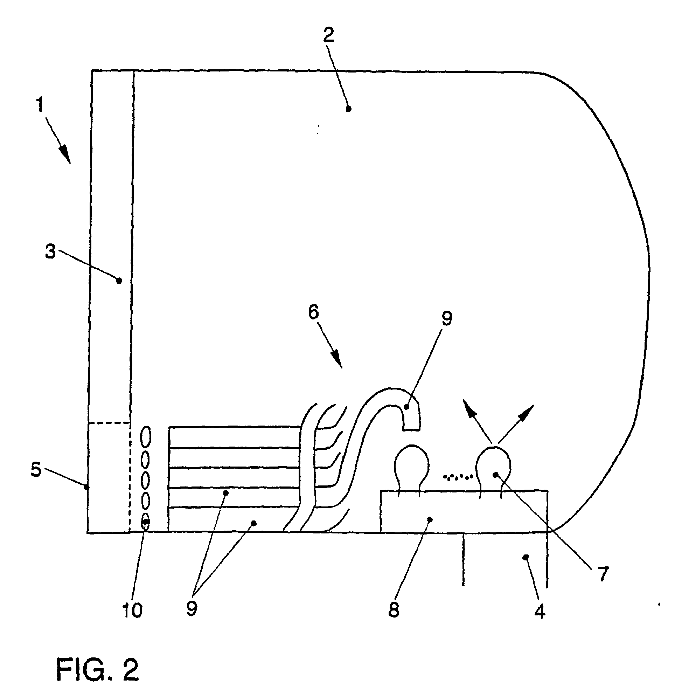

- Fig. 2: eine schematische Querschnittsdarstellung des Kraftfahrzeugrückspiegels.

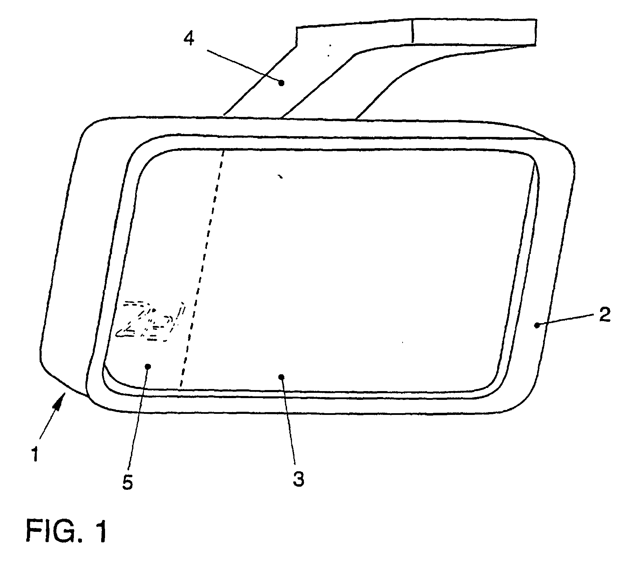

In der Fig. 1 ist ein Kraftfahrzeugrückspiegel 1 dargestellt, der ein Gehäuse 2, ein Spiegelglas 3 und einen am Gehäuse angeordneten Spiegelfuß 4 umfaßt. Ein Bereich des Spiegelglases 3 dient darüber hinaus als Anzeigefläche 5 einer Anzeigevorrichtung 6. Die Anzeigevorrichtung 6 umfaßt eine Vielzahl von Luminiszenzleuchtdioden 7, die auf einer Platine 8 angeordnet sind. Den Luminiszenzleuchtdioden 7 ist jeweils genau ein Lichtleiterkabel 9 zugeordnet, wobei alle Lichtleiterkabel 9 mit ihrer zu den Luminiszenzleuchtdioden 7 entgegengesetzten Stirnfläche im wesentlichen parallel zum Spiegelglas 3 im Bereich der Anzeigefläche 5 angeordnet sind. Das Spiegelglas 3 ist im Bereich der Anzeigefläche 5 semitransparent ausgebildet, so daß eine Lichtaustrittsöffnung gebildet wird. Zwischen dem semitransparenten Spiegelglas 3 und den Lichtleiterkabeln 9 sind Mikrolinsen 10 angeordnet, die zur Fokussierung des Lichtes dienen, wobei die Mikrolinsen 10 auch auf die Stirnfläche der Lichtleiterkabel 9 aufgeklebt werden können. Die Platine 8 mit den Luminiszenzleuchtdioden 7 und der dazugehörigen, nicht dargestellten Ansteuerungslogik kann sowohl innerhalb des Gehäuses 2 als auch außerhalb davon angeordnet sein. Wird die Platine 8 innerhalb des Gehäuses 2 angeordnet, so werden die elektrischen Versorgungs- und Signalleitungen durch den Spiegelfuß 4 ins Innere des Kraftfahrzeuges geführt. Wird hingegen die Platine 8 außerhalb angeordnet, so werden nur die Lichtleiterkabel 9 durch den Spiegelfuß 4 in das Gehäuse 2 geführt und im Bereich der Anzeigefläche 5 angeordnet.

Solange die Luminiszenzleuchtdioden 7 kein Licht emittieren, wirkt das Spiegelglas 3 für einen äußeren Betrachter als einheitliches Ganzes. Erst wenn einzelne Luminiszenzleuchtdioden 7 Licht emittieren und dieses in die Lichtleiterkabel 9 eingekoppelt wird, ist dies von außen visuell wahrnehmbar. Durch eine entsprechende Ansteuerung der Luminiszenzleuchtdioden 7 sind beliebig gestaltete Informationen optisch auf der Anzeigefläche 5 darstellbar. In der Fig. 1 ist beispielhaft eine alphanumerische Darstellung abgebildet. Die Anzeigevorrichtung 6 kann beispielsweise Informationen zur Hilfestellung bei Überholvorgängen darstellen oder als optische Unterstützung für ein Navigationssystem dienen.

## Patentansprüche

1. Anzeigevorrichtung (6) für ein Kraftfahrzeug zur Anzeige von Informationen auf einer von einem Gehäuse (2) umgebenen Spiegelfläche (3), umfassend mindestens ein lichtemittierendes Element (7), dem ein Lichtleiterkabel (9) zugeordnet ist, in dessen eine Stirnfläche Licht vom lichtemittierenden Element (7) einkoppelbar ist und dessen andere Stirnfläche im Gehäuse (2), im wesentlichen parallel zur Spiegelfläche (3) angeordnet ist, wobei die Spiegelfläche (3) im Bereich (5) der zweiten Stimfläche des Lichtleiterkabels (9) mit einer Lichtaustrittsöffnung ausgebildet ist.

2. Anzeigevorrichtung nach Anspruch 1, **dadurch gekennzeichnet, daß** das lichtemittierende Element (7) als Luminiszenzleuchtdiode (7) ausgebildet ist.

3. Anzeigevorrichtung nach Anspruch 1 oder 2, **dadurch gekennzeichnet, daß** die Lichtaustrittsöffnung als Durchbruch in der Spiegelfläche (3) oder als semitransparente Spiegelfläche (3) ausgebildet ist.

4. Anzeigevorrichtung nach einem der Ansprüche 1 bis 3, **dadurch gekennzeichnet, daß** der zweiten Stimfläche des Lichtleiterkabels (9) eine Linse (10) zugeordnet ist, mittels derer die emittierte Strahlung fokussierbar ist.

5. Anzeigevorrichtung nach einem der Ansprüche 1 bis 4, **dadurch gekennzeichnet, daß** die Lichtaustrittsöffnung in Bereichen der Spiegelfläche (3) angeordnet ist, in denen hinsichtlich Verkehrsüberwachung eine geringe Informationswiedergabe zu erwarten ist.

6. Anzeigevorrichtung nach einem der vorangegangenen Ansprüche, **dadurch gekennzeichnet, daß** an der Lichtaustrittsöffnung eine Vielzahl von Lichtleiterkabel (9) angeordnet sind, die wahlweise zusammen ansteuerbar sind.

## Claims

1. Display device (6) for a motor vehicle for displaying information on a mirrored surface (3) surrounded by a housing (2), comprising at least one light-emitting element (7), to which a light guide cable (9) is assigned, into one end face of which light guide cable light from the light-emitting element (7) can be injected and the other end face of which light guide cable is arranged in the housing (2) essentially parallel to the mirrored surface (3), the mirrored surface (3) being formed in the region (5) of the second end face of the light guide cable (9) with a light exit opening.

2. Display device according to Claim 1, **characterized in that** the light-emitting element (7) is embodied as a light-emitting diode (7).

3. Display device according to Claim 1 or 2, **characterized in that** the light exit opening is embodied as an opening in the mirrored surface (3) or as a semitransparent mirrored surface (3).

4. Display device according to one of Claims 1 to 3, **characterized in that** the second end face of the light guide cable (9) is assigned a lens (10) by means of which the emitted radiation can be focused.

5. Display device according to one of Claims 1 to 4, **characterized in that** the light exit opening is arranged in regions of the mirrored surface (3) in which it is to be expected that a small amount of information is to be displayed with respect to traffic monitoring.

6. Display device according to one of the preceding claims, **characterized in that** a multiplicity of light guide cables (9) which can be optionally driven together are arranged at the light exit opening.

## Revendications

1. Dispositif d'affichage (6) pour un véhicule destiné à afficher des informations sur une surface réfléchissante (3) entourée d'un boîtier (2), comprenant au moins un élément émetteur de lumière (7) auquel est associé un câble à fibre optique (9) dans l'une des surfaces frontales duquel de la lumière peut être injectée par l'élément émetteur de lumière (7) et dont l'autre surface frontale est logée dans le boîtier (2), de manière essentiellement parallèle avec la surface réfléchissante (3), la surface réfléchissante (3) étant munie d'un orifice de sortie de la lumière dans la zone (5) de la deuxième surface frontale du câble à fibre optique (9).

2. Dispositif d'affichage selon la revendication 1, **caractérisé en ce que** l'élément émetteur de lumière (7) est réalisé sous la forme d'une diode électroluminescente (7).

3. Dispositif d'affichage selon la revendication 1 ou 2, **caractérisé en ce que** l'orifice de sortie de la lumière est réalisé sous la forme d'une traversée dans la surface réfléchissante (3) ou sous la forme d'une surface réfléchissante semi-transparente (3).

4. Dispositif d'affichage selon l'une des revendications 1 à 3, **caractérisé en ce que** la deuxième surface frontale du câble à fibre optique (9) est associée à une lentille (10) à l'aide de laquelle le rayon émis peut être concentré.

5. Dispositif d'affichage selon l'une des revendications 1 à 4, **caractérisé en ce que** l'orifice de sortie de la lumière est disposé dans des zones de la surface réfléchissante (3) dans lesquelles une faible restitution d'informations est à attendre du point de vue de la surveillance du trafic.

6. Dispositif d'affichage selon l'une des revendications précédentes, **caractérisé en ce qu'**une pluralité de câbles à fibre optique (9) sont disposés au niveau de l'orifice de sortie de la lumière, lesquels peuvent au choix être commandés ensemble.
